# EUROPÄISCHE PATENTSCHRIFT

(11) **EP 0 608 530 B1**
(45) Veröffentlichungstag und Bekanntmachung des Hinweises auf die Patenterteilung: **23.10.1996**
(21) Anmeldenummer: 93119978.0
(22) Anmeldetag: 10.12.1993
(51) Int. Cl.: B60R 22/18, B60R 22/42

(54) **Sicherheitsgurtanordnung**
Seat belt arrangement
Disposition de ceinture de sécurité

(30) Priorität: 23.12.1992 DE 4243916
(43) Veröffentlichungstag der Anmeldung: 03.08.1994
(73) Patentinhaber: TAKATA (EUROPE) VEHICLE SAFETY TECHNOLOGY GmbH, D-89081 Ulm (DE)
(72) Erfinder: Hanna, Harry, Maralin, Cragavon, BT 670 RB (IE)
(74) Vertreter: Dipl.-Phys.Dr. Manitz Dipl.-Ing. Finsterwald Dipl.-Ing. Grämkow Dipl.-Chem.Dr. Heyn Dipl.-Phys. Rotermund Morgan B.Sc.(Phys.)

(56) Entgegenhaltungen:
- EP-A- 0 073 091
- EP-A- 0 173 903
- WO-A-89/02378
- WO-A-89/10285

## Beschreibung

Die Erfindung betrifft eine Sicherheitsgurtanordnung nach dem Oberbegriff des Patentanspruchs 1.

Bei einer Sicherheitsgurtanordnung ohne Gurt-Feststellmechanismus kann es beispielsweise bei einem Unfall noch nach dem Auslösen des Gurtrollen-Sperrmechanismus zu einem unerwünschten weiteren Auszug des Gurtes kommen, da der Gurt in diesem Fall durch den beschleunigten Insassen mit großer Gewalt fester um die Gurtrolle gezogen und im Bereich der Gurtrolle gedehnt wird. Ein der Gurtrolle nachgeschalteter Gurtrollen-Feststellmechanismus kann einen solchen unerwünschten weiteren Auszug des Gurtes verhindern.

Es ist bereits bekannt, eine Sicherheitsgurtanordnung mit einem Gurt-Feststellmechanismus zu versehen, der aus einer Keil-Klemmanordnung besteht, die durch ein mit dem Gurtrollen-Sperrmechanismus in Verbindung stehendes Getriebe ausgelöst wird. Die Klemmanordnung besteht üblicherweise im wesentlichen aus einem Klemmglied und einem in Gurtauszugsrichtung weisenden Keil, der eine parallel zur Stützfläche des Klemmgliedes verlaufende Keilklemmfläche aufweist. Zwischen Stützfläche und Keilklemmfläche verläuft der Gurt. Mit seiner der Keilklemmfläche gegenüberliegenden Keilführungsfläche liegt der Keil an einer Führungsgegenfläche eines fest mit dem Fahrzeugchassis verbundenen Führungskörpers an.

Bei einem derartigen Gurt-Feststellmechanismus besteht das Problem, den Keilwinkel, d.h. den Winkel, den die Keilklemmfläche und die Keilführungsfläche einschließen, richtig zu wählen. Zum schnellen Heranfahren des Keiles an den Gurt im Falle eines Unfalles ist ein steiler Keilwinkel zweckmäßig, doch wird hierdurch die Selbstklemmwirkung durch ein den Keil mitzunehmen suchenden Gurt so stark erniedrigt, daß es sogar zum Durchrutschen des Gurtes kommen kann. Wird der Winkel so flach gewählt, daß eine gute Selbstklemmwirkung erhalten wird, besteht zum einen der Nachteil, daß zum Heranfahren des Keiles an den Gurt ein erheblicher Keilverschiebeweg erforderlich ist; zum anderen kommt es dabei zu einer Selbsthemmung des Keiles, d.h., daß nach dem Aufhören der Zugkraft eine Gurtaufrollung nicht mehr stattfinden kann.

Das Ziel der vorliegenden Erfindung besteht darin, eine Sicherheitsgurtanordnung der eingangs genannten Gattung zu schaffen, bei der im Falle eines Unfalls die Gurtfeststellung zwar schnell erfolgt, gleichwohl aber die dabei erzielte Gurtklemmkraft wesentlich größer als die durch das Getriebe übertragene Kraft sein kann, ohne daß die Keilanordnung irreversibel verschoben wird.

Zur Lösung dieser Aufgabe sind die Merkmale des kennzeichnenden Teils des Patentanspruchs 1 vorgesehen.

Wesentlich für die Erfindung ist, daß durch die Selbsthemmungsfläche des ersten Keils und die Selbsthemmungsgegenfläche des zweiten Keils eine zusätzliche innere Keilgleitfläche geschaffen ist, an der nach dem In-Eingriff-Kommen von Keil und Gurt durch die Getriebewirkung zusätzlich ein Relativgleiten der beiden Keile aufgrund der Mitnahme des ersten Keils durch den Gurt erfolgt. Da diese innere Keilgleitfläche einen kleineren Winkel als die gesamte Keilanordnung mit der Gurtebene einschließt, wird durch das Gleiten des ersten Keils auf dem zweiten längs dieser inneren Keilgleitfläche eine vergleichsweise hohe zusätzliche Klemmkraft am Gurt erzeugt. Durch die Selbsthemmung zwischen erstem und zweitem Keil wird ein selbsttätiges Zurückrutschen des ersten Heils so lange vermieden, bis der zweite Heil in seine Ausgangsstellung zurückrutschen kann. Durch entsprechend geringe Neigung der Selbsthemmungsflächen kann die Anpreßkraft für den Gurt im Gurtfeststellmechanismus praktisch beliebig gestaltet werden. Normalerweise soll der Winkel aber nicht kleiner als 10° sein.

Andererseits erfolgt die Freigabe der Keilanordnung nach einem Klemmvorgang durch ein Gleiten der Keilführungsfläche des zweiten Heiles längs der Führungsgegenfläche des Führungskörpers. Da der zwischen diesen Gleitflächen und der Gurtebene auftretende Winkel der gesamten Keilanordnung vergleichsweise groß und vorzugsweise nicht-selbsthemmend ist, wird die Keilanordnung beim Nachlassen der Zugkraft des Gurtes problemlos selbsttätig freigegeben.

Der bei der vorbekannten Sicherheitsgurtanordnung mit nur einem Keil erforderliche Kompromiß bei der Wahl des Keilwinkels wird also erfindungsgemäß dadurch vermieden, daß die Funktionen des schnellen Heranfahrens des Heils an den Gurt bei einem Unfall und das selbsttätige Freigeben des Keils nach einem Unfall einerseits sowie die selbsttätige Klemmung des Gurtes durch Mitnahme des an ihr anliegenden Keiles auf zwei verschiedene Keile, die in der erfindungsgemäßen Weise miteinander zusammenwirken, verteilt werden. Beide Keilwinkel können somit optimal nach den ihnen zugewiesenen Funktionen festgelegt werden.

Vorteihafte Weiterbildungen in der Erfindung sind durch die Unteransprüche gekennzeichnet.

Von besonderem Vorteil ist die verschiebbare Ausbildung des Klemmgliedes nach Anspruch 11 oder 12, weil hierdurch ein Rutschen des Keils auf dem Gurt bzw. ein Rutschen des Gurtes am Klemmglied vollständig vermieden wird, wodurch der Gurt gegen Abrieb und Verschleiß sicher geschützt wird.

Besonders bevorzugt ist der Antrieb des Getriebes durch die in den Ansprüchen 14 bis 16 definierten Maßnahmen.

Die Erfindung wird im folgenden beispielsweise anhand der Zeichnung beschrieben; in dieser zeigt:
- Fig. 1: eine schematische Schnittansicht einer Sicherheitsgurtanordnung mit Gurthalter und Gurt-Feststellmechanismus im Ruhezustand,
- Fig. 2: eine auseinandergezogene perspektivische Ansicht des Gurt-Feststellmechanismus,
- Fig.: 3 die gleiche Schnittansicht wie Figur 1 mit Gurthalter und Gurt-Feststellmechanismus während der Auslösephase und
- Fig. 4: die gleiche Schnittansicht wie Figur 1 und 2 mit Gurthalter und Gurt-Feststellmechanismus nach erfolgtem Verklemmen des Gurtes durch die erfindungsgemäße Keilanordnung.

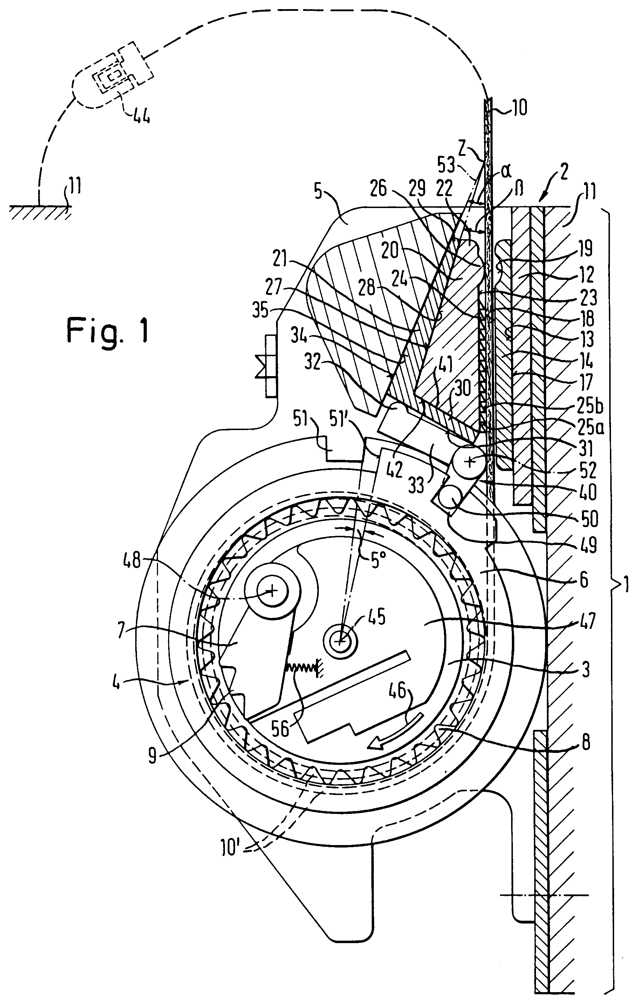

Nach Figur 1 besteht eine erfindungsgemäße Sicherheitsgurtanordnung aus einer im einzelnen dargestellten Gurtaufwickel-Feststellvorrichtung 1, aus der ein Gurt 10 austritt, der in nur gestrichelt angedeuteter Weise über ein von der durch den Gurt 10 gesicherten Person zu öffnendes Schloß 44 zu einem Teil des Chassis 11 des Fahrzeuges geführt und dort in geeigneter Weise befestigt ist. Die Gurtaufwickel-Feststellvorrichtung 43 ist ihrerseits ebenfalls am Chassis 11 des Fahrzeuges befestigt.

Der Gurt 10 ist zu einem Gurthalter 1 geführt, welcher eine um eine Achse 45 drehbare Gurt-Aufwickelrolle 3 umfaßt. Auf diese Gurt-Aufwickelrolle 3 ist der Gurt 10 in der bei 10' gestrichelt angedeuteten Weise mehr oder weniger weit aufgewickelt. Eine nicht dargestellte Spiralfeder erzeugt an der Gurt-Aufwickelrolle 3 ein Aufwickel-Drehmoment in Richtung des Pfeiles 46 in Figur 1. Aufgrund dieses Drehmomentes wird der Gurt 10 so weit auf die Gurt-Aufwickelrolle 3 aufgewickelt, bis er dicht am Körper der von ihm gesicherten Person anliegt.

Auf der Nabe 47 der Gurt-Aufwickelrolle 3 sitzt ein um eine parallel zur Achse 45 verlaufende Achse 48 verschwenkbarer Sperrhaken 7, der an dem von der Achse 48 abgewandten Ende mit einer Verzahnung 9 versehen ist. Relativ zur Drehachse 45 radial gegenüber der Zahnung 9 befindet sich ein zur Achse 45 konzentrischer Innenzahnkranz 8, welcher an einem ebenfalls konzentrisch zur Drehachse 45 angeordneten Sperring 6 ausgebildet ist.

Der Sperrhaken 7 wird durch nicht dargestellte Sensor-Mittel sowohl bei unfallbedingten Beschleunigungen des Fahrzeuges als auch bei einem plötzlichen ruckartigen Ausziehen des Gurtes 10 aus der Gurtaufwickel-Feststellvorrichtung 43 in Richtung auf den Innenzahnkranz 8 verschwenkt, so daß dessen Zahnung 9 mit dem Innenzahnkranz 8 in Eingriff kommt. Aufgrund der Tatsache, daß die Schwenkachse 48 relativ zur Verzahnung 9 entgegengesetzt zur Auszugsrichtung liegt, wird auf den Sperrhaken 7 nach dem In-Eingriff-Kommen der Verzahnung 9 mit dem Innenzahnkranz 8 ein Drehmoment im Uhrzeigersinn ausgeübt, welches einen sicheren Sperreingriff zwischen dem Sperrhaken 7 und dem Innenzahnkranz 8 gewährleistet.

Erfindungsgemäß ist der Sperring 6 in diesem Falle um einen geringfügigen Winkel von beispielsweise 5° entgegen dem Uhrzeigersinn in Figur 1 verdrehbar, um einen in einem am Umfang des Sperrings 6 vorgesehenen Radialschlitz 49 nockenartig angeordneten Hebelarm 50, der zu einem weiter unten beschriebenen Getriebe 40 gehört, um ein entsprechendes Stück in Umfangsrichtung entgegen dem Uhrzeigersinn zu verschieben.

Begrenzt wird die entgegen dem Uhrzeigersinn erfolgende Drehbewegung des Sperrings 6 bei einer Zugbeaufschlagung des Gurtes 10 und in Eingriff befindlichen Verzahnungen 8, 9 durch einen gehäusefesten Anschlag 51, gegen den eine radial nach außen vorspringende Stufe 51' des Sperringes 6 anschlägt.

Bevorzugt ist es jedoch, wenn der Sperrhaken 7 nach dem In-Eingriff-Kommen der Zahnungen 8, 9 oder der Sperring 6 eine weitere Sperrklinke beaufschlagen, die dadurch in Eingriff mit einem weiteren, nicht dargestellten und gehäusefesten Innenzahnkranz gebracht wird. Die Wirkung auf den Sperring 6 ist in diesem Fall jedoch die gleiche, wie sie durch Vorsehen des Umfangsanschlages 51 erzielt wird, nämlich daß seine Drehbewegung in Umfangsrichtung entgegen dem Uhrzeigersinn auf einen geringen Winkel von beispielsweise 5° beschränkt ist.

Die bis hierher beschriebenen Bauelemente stellen einen Gurtrollensperrmechanismus 4 dar, der gleichzeitig dazu dient, ein Getriebe 40 derart zu beaufschlagen, daß der im folgenden im einzelnen beschriebene Gurt-Feststellmechanismus 2 im Falle des Ansprechens der Sensor-Mittel zur Auslösung des Gurtrollensperrmechanismus 4 betätigt wird.

Der Gurt-Festellmechanismus 2 besteht aus einem fest mit dem Chassis 11 des Kraftfahrzeugs verbundenen Rahmenträger 12, der eine parallel zur Gurtebene verlaufende und zu dieser gerichtete Rahmenträgerfläche 13 aufweist, auf der ein sich im wesentlichen parallel zum Gurt erstreckendes, parallel zum Rahmenträger 12 geführt verschiebbaren Klemmglied 14 in Plattenform aufliegt, sowie aus einer auf der gegenüberliegenden Seite des Gurtes 10 vorgesehenen Keilanordnung 20, 21, die an einem fest mit dem Gehäuse 5 der Sicherheitsgurtanordnung verbundenen Führungskörper 16 anliegt. Das Klemmglied 14 liegt mit seiner vom Gurt 10 abgewandten Klemmglied-Rückfläche 17 auf der Rahmenträgerfläche 13 des Rahmenträgers 12 und mit seiner dem Gurt 10 zugewandten Stützfläche 18 in geringem Abstand vom Gurt 10. Die Stützfläche 18 weist an ihrem in Auszugsrichtung des Gurtes 10 befindlichen Ende eine quer zur Längsrichtung des Gurtes 10 verlaufende Aussparung 19 auf, die die Form einer flachen und vor allem kantenfreien Mulde besitzt.

Die Keilanordnung besteht aus zwei nebeneinanderliegenden Keilen 20, 21 mit in Gurtauszugsrichtung weisenden Keilspitzen 22, 29. Der erste Keil 20 besitzt eine parallel und in geringem Abstand vom Gurt 10 verlaufende Keilklemmfläche 23. Die Keilklemmfläche 23 ist mit einer gegen den Gurt 10 gerichteten Zahnung 24 versehen, wobei die Zähne entgegen der Gurtauszugsrichtung geneigt sind und somit unten im wesentlichen senkrecht zur Gurtebene verlaufende Flanken 25a und oben schräg zu dieser angeordnete Flanken 25b aufweisen. Die Keilklemmfläche 23 besitzt an ihrem in Gurtauszugsrichtung liegenden Ende einen zur muldenartigen Aussparung 19 komplementären Vorsprung 26, der als flache, quer zur Gurtauszugsvorrichtung verlaufende Rippe ausgebildet ist.

Als zweite Keilfläche besitzt der erste Keil 20 eine Selbsthemmungsfläche 27, die an einer Selbsthemmungs-Gegenfläche 28 des zweiten Keiles 21 anliegt.

An dem der Spitze 29 entgegengesetzten Ende des zweiten Keils 21 ist eine die Rückfläche 42 des Keils 20 untergreifende Tragverlängerung 30 vorgesehen, deren obere Tragfläche 41 eben ist und an der ebenfalls ebenen Rückfläche 42 des ersten Keils 20 anliegt. An der unteren Anschlagsfläche 31 der Tragverlängerung 30 liegt ein Anschlag 32 eines einen Teil des Getriebes 40 bildenden Schwenkhebels 33 an. Der Schwenkhebel ist um eine parallel zur Drehachse 45 verlaufende Schwenkachse 52 verschwenkbar und mit dem in den Radialschlitz 49 eingreifenden Hebelarm 50 so verbunden, daß in der in Figur 1 dargestellten Ruhelage der Hebelarm 50 im wesentlichen radial zur Gurt-Aufwickelrolle 3 verläuft, der Schwenkhebel 33 dagegen im wesentlichen tangential.

Die vom Gurt 10 abgewandte Keilführungsfläche 34 des zweiten Keiles 21 liegt an einer ebenen Führungsgegenfläche 35 eines gehäusefesten Führungskörpers 16 an. Die gedachte Verlängerung 53 der ebenen Keilführungsfläche 34 bzw. der Führungsgegenfläche 35 schneidet die Gurtebene in einer senkrecht auf der Zeichnungsebene der Figur 1 stehenden Geraden Z und unter einem Winkel α, der größer als der Selbsthemmungswinkel der aus beiden Keilen 20, 21 bestehenden Keilanordnung ist.

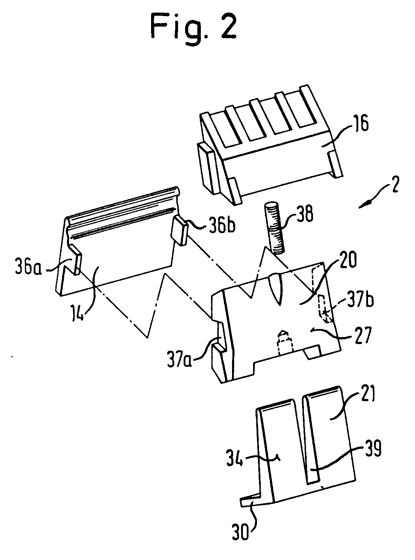

In Figur 2 sind die Elemente des Gurtfeststellmechanismus 2 in auseinandergezogener perspektivischer Darstellung gezeigt. Das Klemmglied 14 besitzt zwei seitlich angeordnete, senkrecht zu der Stützfläche 18 verlaufende Fortsätze 36a, 36b die jeweils in seitlich angeordnete Nuten 37a, 37b des ersten Keils 20 formschlüssig eingreifen. Darüber hinaus ist aus Figur 2 ersichtlich, daß zwischen dem Führungskörper 16 und erstem Heil 20 eine sich im wesentlichen in Gurtauszugsrichtung erstreckende Druckfeder 38 angeordnet ist, die längs eines Schlitzes 39 des zweiten Heils 21 durch diesen durchgeführt ist. Die Druckfeder 38 dient dazu, eine entgegen der Gurtauszugsrichtung wirkende Vorspannung zwischen dem Führungskörper 16 und dem erstem Keil 20 zu erzeugen, so daß gewährleistet ist, daß die Keilanordnung 20, 21 im Ruhezustand, d.h. bei der in Figur 1 dargestellten Position des Sperringes 6 bzw. des Getriebes 40 außer Eingriff mit dem Gurt 10 und dem Klemmglied 14 ist.

Die Wirkungsweise des erfindungsgemäßen Gurtfeststellmechanismus 2 wird nun anhand der Figuren 1, 3 und 4 beschrieben:

In der Ruhestellung nach Figur 1 wickelt die Gurt-Aufwickelrolle 3 den Gurt 10 unter dem Einfluß der nicht dargestellten Wickelfeder zu einem Wickel 10' so lange auf, bis der Gurt 10 straff am Körper der von ihm gesicherten Person anliegt.

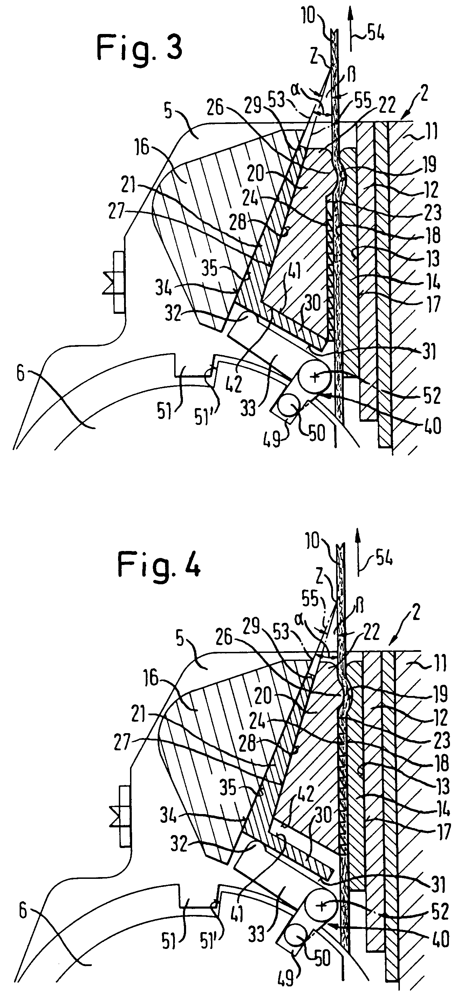

Tritt jetzt eine unfallbedingte oder durch einen plötzlichen Auszug des Gurtes 10 bedingte Beschleunigung am Gurtrollensperrmechanismus 4 auf, so verschwenkt der Sperrhaken 7 unter dem Einfluß der nicht dargestellten Stellelemente entgegen dem Uhrzeigersinn, wodurch die Zahnungen 8, 9 in Eingriff kommen und bei weiterem Zug am Gurt 10 der Sperring 6 sich entgegen den Uhrzeigersinn so lange verdreht, bis entweder die an ihm vorgesehene Anschlagstufe 51' mit dem gehäusefesten Anschlag 51 in Eingriff kommt oder die nicht dargestellte weitere Sperrklinke mit dem ebenfalls nicht dargestellten gehäusefesten Innenzahnkranz in Eingriff gelangt ist. Bei dieser Bewegung wird der Hebelarm 50 und der Schwenkhebel 33 im Uhrzeigersinn in die aus Figur 3 ersichtliche Position geschwenkt, wobei der am Ende des Schwenkhebels 33 vorgesehene Anschlag 32 die Keilanordnung 20, 21 als Einheit in die aus Figur 3 ersichtliche Position verschwenkt, in welcher durch Entlanggleiten der Keilanordnung 20, 21 an der Führungsgegenfläche 35 die Keilklemmfläche 23 den zwischen ihr und der Stützfläche 18 geradlinig und eben hindurchgeführten Gurt 10 gegen die Stützfläche 18 drückt, wobei der nach Art eines Zylinderausschnitts mit senkrecht auf der Zeichnungsebene der Figur 1 stehende Achse ausgebildete Vorsprung 26 in die muldenartige Aussparung 19 eintritt und dabei den Gurt in der aus Figur 3 ersichtlichen Weise einklemmt.

Nachdem nunmehr die Keilklemmfläche 23 und insbesondere die auf ihr angeordnete Zahnung 24 in festem und kraftschlüssigem Eingriff mit dem Gurt 10 steht, wird der erste Keil 20 bei Fortdauer der in Richtung des Pfeiles 54 wirkenden Gurtauszugskraft relativ zu dem zweiten Keil 21 in Gurtauszugsrichtung mitgenommen.

Der Grund für diese Mitnahme besteht darin, daß eine gedachte Verlängerung 55 der ebenen Selbsthemmungsfläche 27 bzw. Selbsthemmungsgegenfläche 28 sich in der gleichen senkrecht auf der Zeichnungsebene stehenden Geraden Z mit der Ebene des Gurtes 10 schneidet wie die gedachte Verlängerung 51 der Keilführungsfläche 34 bzw. der Führungsgegenfläche 35 und weil der Winkel β zwischen der gedachten Verlängerung 55 der Selbsthemmungsflächen 27, 28 kleiner als der Winkel α zwischen der gedachten Verlängerung 53 der Führungsgegenfläche 35 und der Gurtebene ist.

Da der Winkel β kleiner ist, als es für eine Selbsthemmungswirkung zwischen den Keilen 20, 21 erforderlich ist, kann der erste Keil 20 zwar aus der Position nach Figur 3 durch den Gurt 10 in die Position nach Figur 4 von der Tragverlängerung 30 des zweiten Keils 21 um ein bestimmtes Stück weggezogen werden, wobei die Klemmung des Gurtes 10 zwischen dem ersten Keil 20 und dem Klemmglied 14 entsprechend gesteigert wird. Aufgrund des Selbsthemmungswinkels β und der entsprechenden Ausbildung der Selbsthemmungsflächen 27, 28 kann der erste Keil 20 jedoch aus der Position nach Figur 4 nicht ohne weiteres in die nach Figur 3 zurückkehren, so daß so lange, wie der Sperring 6 sich in der aus den Figuren 3 und 4 ersichtlichen Sperrposition befindet, die erheblich gesteigerte Klemmung des Gurtes 10 zwischen der Keilanordnung 20, 21 und dem Klemmglied 14 aufrechterhalten bleibt.

Erst wenn die Auszugskraft 54 am Gurt 10 nachläßt oder ganz verschwindet, bewirkt die nicht dargestellte Wickelfeder, daß die Gurt-Aufwickelrolle 3 sich in Richtung des Pfeiles 46 in Figur 1 bewegt, wodurch der Sperrhaken 7 aufgrund der Wirkung einer in Figur 1 schematisch angedeuteten Zugfeder 56 aus dem Verzahnungseingriff mit dem Innenzahnkranz 8 herausbewegt wird, so daß der Sperring 6 nunmehr im Uhrzeigersinn verdreht werden kann, was dadurch geschieht, daß der Gurt 10 - unterstützt durch die Rückstellfelder 38 (Fig. 2) - die Keilanordnung 20, 21 aus der Position nach Figur 4 nach unten mitnimmt. Hierbei gleitet der zweite Keil 21 an der Heilführungsfläche 34 entlang, die erfindungsgemäß unter einem solchen Winkel α angeordnet ist, daß an diesen Flächen keine Selbsthemmung eintritt. Durch das Mitnehmen des zweiten Keils 21 bewegt der Schwenkhebel 33 durch Schwenken um die Schwenkachse 52 und Mitnehmen des unter 90° dazu angeordneten Hebelarms 50 den Sperring 6 entgegen dem Uhrzeigersinn in die aus Figur 1 ersichtliche Lage.

Sobald im Verlaufe dieser Bewegung die Preßkraft zwischen dem ersten Keil 20 und dem Klemmglied 14 reduziert wird, entfällt die Selbsthemmungswirkung zwischen den Selbsthemmungsklemmflächen 27, 28, so daß schließlich auch der erste Keil 20 relativ zum zweiten Keil 21 wieder in die Position nach Figur 1 zurück befördert wird.

Hierbei wirkt wesentlich die in Figur 2 dargestellte Druckfeder 38 mit. Diese Feder hält vor allen Dingen die Keilanordnung 20, 21 in der aus Figur 1 ersichtlichen Ruhelage.

Da das Klemmglied 14 in Gurtauszugsrichtung verschiebbar am Rahmenträger 12 befestigt ist, wird es bei Überführung der Keilanordnung 20, 21 aus der Position nach Figur 1 in die nach Figur 3 und schließlich in die nach Figur 4 in der aus der Zeichnung ersichtlichen Weise mitgenommen. Beim Nachlassen der Auszugskraft 54 kehrt dann das Klemmglied 14 in die aus Figur 1 ersichtliche Ruheposition zurück, was durch die formschlüssige Kopplung mit dem ersten Keil 20 unterstützt werden kann.

Der weitere Auszug des Gurtes 10 aus der in Figur 3 dargestellten Position in die nach Figur 4 ist trotz der Blockierung der Gurt-Aufwickelrolle 3 deswegen möglich, weil der Wickel 10' auf der Gurt-Aufwickelrolle 3 relativ locker ist und bei entsprechend großen Gurtauszugskräften 54 noch erheblich zusammengezogen werden kann.

Grundsätzlich könnte das Klemmglied 14 auch feststehend ausgebildet sein; in diesem Fall dürfte allerdings nicht die Mulde 29 und der Vorsprung 26 vorgesehen sein. Vielmehr müßte dann die Stützfläche 18 glatt ausgebildet sein, damit auf der entgegengesetzten Seite des Gurtes 10 der Keil 20 unter Abstützung an dem feststehenden Klemmglied 14 auf dem Gurt oder auch mit dem Gurt in Auszugsrichtung 10 gleiten kann.

## Patentansprüche

1. Sicherheitsgurtanordnung mit einer am Chassis (11) eines Kraftfahrzeugs befestigbaren Gurtaufwickel-Festellvorrichtung (1), die eine unter einer Aufrollkraft stehende Gurtaufwickelrolle (3) enthält, die mit einem Gurtrollen-Sperrmechanismus (4), welcher zumindest bei unfallbedingten Beschleunigungen des Fahrzeuges und/oder des Gurtes (10) in Auszugsrichtung die Gurtrolle (3) schlagartig in Auszugsrichtung blockiert, und mit einem Gurt-Feststellmechanismus (2) versehen ist, der unmittelbar vor der Stelle, wo der Gurt (10) auf die Gurtaufwickelrolle (3) aufläuft, vorgesehen ist und
- ein Klemmglied (14) mit einer parallel zur und nahe der Gurtebene verlaufenden Stützfläche (18),
- eine auf der gegenüberliegenden Seite des Gurtes (10) befindliche, mit dem zusammenlaufenden Ende (22, 29) in Auszugsrichtung weisende Keilanordnung (20, 21) mit
-- einer parallel zur Stützfläche (18) und nahe dem Gurt (10) verlaufenden Keilklemmfläche (23) und
-- einer auf der vom Gurt (10) abgewandten Seite vorgesehenen Keilführungsfläche (34), deren Schnittlinie (Z) mit der Keilklemmfläche (23) parallel zur Gurtebene und senkrecht zur Gurtlängsrichtung verläuft, sowie
- einen feststehenden Führungskörper (16) umfaßt, der eine mit der Keilführungsfläche (34) im vorzugsweise nicht-selbsthemmenden Gleiteingriff stehende Führungsgegenfläche (35) aufweist,
wobei ein entsprechend dem Gurtrollen-Sperrmechanismus (4) beaufschlagtes Getriebe (40) zumindest bei unfallbedingter Beschleunigung die Keilanordnung (20, 21) entlang der Führungsgegenfläche (35) in Gurtauszugsrichtung und in Eingriff mit dem hierbei gegen die Stützfläche (18) gedrückten Gurt (10) verschiebt, wodurch dem weiteren Auszug des Gurtes (10) zusätzlich entgegengewirkt wird,
dadurch **gekennzeichnet,**
daß die Keilanordnung (20, 21) aus zwei in Längsrichtung des Gurtes nebeneinanderliegenden Keilen (20, 21) besteht, von denen der erste (20) die Keilklemmfläche (23) und der zweite (21) die Keilführungsfläche (34) aufweist und die beiden Keile (20, 21) entlang einer Selbsthemmungsfläche (27) des ersten Keiles (20) und einer Selbsthemmungsgegenfläche (28) des zweiten Keiles (21) derart
aneinanderliegen, daß nach dem durch das Getriebe (40) hervorgerufene In-Eingriff-Kommen der Keilklemmfläche (23) mit dem Gurt (10) und der Stützfläche (18) der Gurt (10) in Auszugsrichtung den ersten Keil (20) unter Gleiten auf dem zweiten Keil (21) noch um ein Stück mitnehmen kann, wodurch die Klemmkraft zwischen der Keilklemmfläche (23) und der Stützfläche (18) selbsttätig weiter erhöht wird.

2. Sicherheitsgurtanordnung nach Anspruch 1,
dadurch **gekennzeichnet,**
daß der zweite Keil (21) an seiner dem zusammenlaufenden Ende (29) abgewandten Seite eine im wesentlichen in Form eines Winkels angeformte, den ersten Keil (20) untergreifende Tragverlängerung (30) mit einer Tragfläche (41) aufweist, auf der die dem zusammenlaufenden Ende (22) des ersten Keils (20) abgewandte Standfläche (42) des ersten Keils (20) aufliegt, solange eine Verschiebung der Keilanordnung (20, 21) noch nicht stattgefunden hat.

3. Sicherheitsgurtanordnung nach Anspruch 1 oder 2,
dadurch **gekennzeichnet,**
daß die Klemmfläche (23) des ersten Keils (20) mit einer gegen den Gurt (10) gerichteten Zahnung (24) versehen ist.

4. Sicherheitsgurtanordnung nach Anspruch 3,
dadurch **gekennzeichnet,**
daß die Zahnung (24) aus einer Vielzahl quer zur Gurtrichtung verlaufender Zahnreihen gebildet ist, die in Gurtrichtung gesehen nebeneinander angeordnet sind, wobei jede Zahnreihe im Querschnitt aus zwei gegenüber dem Gurt (10) aufeinander zulaufenden Flanken (25a, 25b) besteht und die in Gurtauszugsrichtung weisende Flanke (25b) einen spitzeren Winkel zur Gurtebene aufweist als die von ihr abgewandte zweite Flanke (25a).

5. Sicherheitsgurtanordnung nach einem der vorhergehenden Ansprüche,
dadurch **gekennzeichnet,**
daß die Stützfläche (18) des Klemmgliedes (14) eine sich quer zur Gurtrichtung erstreckende Ausnehmung (19) besitzt, der ein im wesentlichen komplementär ausgebildeter Vorsprung (26) auf der Klemmfläche (23) des ersten Keils (20) zugeordnet ist.

6. Sicherheitsgurtanordnung nach einem der Ansprüche 3, 4 oder 5,
dadurch **gekennzeichnet,**
daß der Vorsprung (26) auf der Klemmfläche (23) des ersten Keils (20) in Gurtauszugsrichtung hinter der Zahnung (24) der Klemmfläche (23) angeordnet ist.

7. Sicherheitsgurtanordnung nach einem der vorhergehenden Ansprüche,
dadurch **gekennzeichnet,**
daß der erste Keil (20) durch eine entgegen der Gurtauszugsrichtung wirkende federnde Rückstellkraft beaufschlagt ist.

8. Sicherheitsgurtanordnung nach Anspruch 7,
dadurch **gekennzeichnet,**
daß zwischen Führungskörper (16) und dem ersten Keil (20) eine zumindest eine wesentliche Komponente parallel zur Gurtrichtung aufweisende Druckfeder (38) angeordnet ist, die in einen sich längs des zweiten Keiles (21) erstreckenden Schlitz (39) geführt angeordnet ist.

9. Sicherheitsgurtanordnung nach einem der vorhergehenden Ansprüche,
dadurch **gekennzeichnet,**
daß das Klemmglied (14) feststehend ist.

10. Sicherheitsgurtanordnung nach Anspruch 1 bis 8,
dadurch **gekennzeichnet,**
daß das Klemmglied (14) in Gurtauszugsrichtung relativ zum Chassis (11) verschiebbar auf einem feststehenden Träger (12) angeordnet ist.

11. Sicherheitsgurtanordnung nach Anspruch 10,
dadurch **gekennzeichnet,**
daß das Klemmglied (14) und der erste Keil (20) in Gurtauszugsrichtung miteinander kraftschlüssig vorzugsweise formschlüssig gekoppelt sind.

12. Sicherheitsgurtanordnung nach Anspruch 11,
dadurch **gekennzeichnet,**
daß das Klemmglied (14) zwei seitlich angeordnete, senkrecht zur Stützfläche (18) verlaufende Führungsfortsätze (36a, 36b) besitzt, die jeweils in eine seitlich angeordnete Führungsnut (37a, 37b) des ersten Keils (20) eingreifen und somit eine formschlüssige Verbindung zwischen Klemmglied (14) und erstem Keil (20) herstellen.

13. Sicherheitsgurtanordnung nach einem der vorhergehenden Ansprüche,
dadurch **gekennzeichnet,**
daß das Getriebe (40) einen Schwenkhebel (33) mit einem Anschlag (32) aufweist, der an einer dem zusammenlaufenden Ende (22, 29) der Keilanordnung gegenüberliegenden Anschlagsfläche (31) insbesondere der Tragverlängerung (30) des Keils (21) anliegt und beim In-Gang-Setzen des Getriebes (40) ausschwenkt und dadurch die Keilanordnung (20, 21) verschiebt und so die Klemmfläche (23) mit dem Gurt (10) und der Stützfläche (18) in Eingriff bringt.

14. Sicherheitsgurtanordnung nach Anspruch 13,
dadurch **gekennzeichnet,**
daß der Schwenkhebel (33) einem im wesentlichen rechtwinklig von ihm vorstehenden Arm (50) aufweist, der in einen Radialschlitz (49) am Umfang eines Sperringes (6) des Gurtrollensperrmechanismus (4) eingreift und von diesem im Falle der Auszugsblockierung in die Keilanordnungsvorschublage verschwenkt wird.

15. Sicherheitsgurtanordnung nach einem der vorhergehenden Ansprüche,
dadurch **gekennzeichnet,**
daß der Sperring (6) des Gurtrollensperrmechanismus (4) nach der Auszugsblockierung noch ein Stück drehbar ist und diese Drehbewegung zur Verschiebung der Keilanordnung (20, 21) in die Feststellposition ausgenutzt wird.

16. Sicherheitsgurtanordnung nach Anspruch 15,
dadurch **gekennzeichnet,**
daß Anschlagmittel (50) beim Erreichen der Feststellposition den Sperring (6) gegen weiteres Verdrehen festhalten.

## Claims

1. Safety belt arrangement comprising a belt reeling/holding device (1) securable to the chassis of a motor vehicle and containing a belt reel (3) standing under a reeling in force in which is provided with a belt reel blocking mechanism (4) which abruptly blocks the belt reel (3) in the pull-out direction at least with accident-dependent accelerations of the vehicle and/or of the belt (10) and which is provided with a belt holding mechanism (2) which is provided directly before the position at which the belt (10) runs onto the belt winding reel (3) and has
- a clamping member (14) with a support surface (18) extending parallel to and close to the belt plane,
- a wedge arrangement (20, 21) located at the opposite side of the belt (10) with its convergent end (22, 29) pointing in the pull-out direction and having
-- a wedge clamping surface (23) extending parallel to the support surface (18) and close to the belt (10) and
-- a wedge guiding surface (34) provided at the side remote from the belt (10), the line of intersection (Z) of which with the wedge clamping surface (23) extends parallel to the belt plane and perpendicular to the longitudinal belt direction, and also
- includes a stationary guide body (16) which has a guide countersurface (35) standing in a preferably non self-locking sliding engagement with the wedge guiding surface (34),
wherein a transmission acted on in correspondance with the belt reel blocking mechanism (4) displaces the wedge arrangement (20, 21) along the guide countersurface (35) in the belt pull-out direction, at least when an accident-dependent acceleration occurs, and into engagement with the belt (10) which is hereby pressed against the support surface (18), whereby the further pull-out of the belt is additionally counteracted, characterised in that
the wedge arrangement (20, 21) consists of two wedges (20, 21) lying alongside one another in the longitudinal direction of the belt of which the first (20) has the wedge clamping surface (23) and the second (21) has the wedge guiding surface (34) and wherein the two wedges (20, 21) contact one another along a self-locking surface (27) of the first wedge (20) and a self-locking surface (28) of the second wedge (21) in such a way that after the entry into engagement of the wedge clamping surface (23) with the belt (10) and the support surface (18), which is caused by the transmission (40), the belt (10) can still be moved along a but further in the pull-out direction of the first wedge (20) while sliding on the second wedge (21), whereby the clamping force between the wedge clamping surface (23) and the support surface (18) is automatically further increased.

2. Safety belt arrangement in accordance with claim 1, characterised in that the second wedge (21) has, at its side remote from the conversent end (29), a carrier extension (30) formed on it and having a carrier surface (41), the carrier extension (30) having essentially the shape of an angle and engaging beneath the first wedge (20), with the standing surface (42) of the first wedge (20) remote from the convergent end (22) of the first wedge (20) lying on the carrier surface (41) so long as a displacement of the wedge arrangement (20, 21) has not yet taken place.

3. Safety belt arrangement in accordance with claim 1 or claim 2, characterised in that the clamping surface (23) of the first wedge (20) is provided with a toothed arrangement (24) directed towards the belt (10).

4. Safety belt arrangement in accordance with claim 3, characterised in that the toothed arrangement (24) is formed by a plurality of tooth rows extending transverse to the belt direction which are arranged alongside one another when seen in the belt direction, with each tooth row consisting in cross-section of two flanks (25a, 25b) which converge relative to the belt (10) and with the flank (25b) pointing in the belt pull-out direction having a more acute angle to the belt plane than the second flank (25a) facing away from it.

5. Safety belt arrangement in accordance with one of the preceding claims, characterised in that the support surface (18) of the clamping member (14) has a cut-out (19) extending transverse to the belt direction with a projection (26) of substantially complementary shape on the clamping surface (23) of the first wedge (20) being associated with the cut-out (19).

6. Safety belt arrangement in accordance with one of the claims 3, 4, or 5, characterised in that the projection (26) is arranged on the clamping surface (23) of the first wedge (20) in the belt pull-out direction behind the toothed arrangement (24) of the clamping surface (23).

7. Safety belt arrangement in accordance with one of the preceding claims, characterised in that the first wedge (20) is acted on by a resilient resetting force acting contrary to the belt pull-out direction.

8. Safety belt arrangement in accordance with claim 7, characterised in that a compression spring (38) having at least a substantial component parallel to the belt direction is arranged between the guide body (16) and the first wedge (20) and is guidedly arranged in a slot (39) extending along the second wedge (21).

9. Safety belt arrangement in accordance with one of the preceding claims, characterised in that the clamping member (14) is stationary.

10. Safety belt arrangement in accordance with claims 1 to 8, characterised in that the clamping member (14) is displaceably arranged in the belt pull-out direction relative to the chassis (11) on a stationary carrier (12).

11. Safety belt arrangement in accordance with claim 10, characterised in that the clamping member (14) and the first wedge (20) are coupled together in a force transmitting manner and preferably in a form-fitted manner in the belt pull-out direction.

12. Safety belt arrangement in accordance with claim 11, characterised in that the clamping member (14) has two laterally arranged guide extensions (36a, 36b) extending perpendicular to the support surface (18) which respectively engage into a laterally disposed guide groove (37a, 37b) of the first wedge (20), and thus produce a form-fitted connection between the clamping member (14) and the first wedge (20).

13. Safety belt arrangement in accordance with one of the preceding claims, characterised in that the transmission (40) has a pivotal lever (33) with an abutment (32) which contacts an abutment surface (31), in particular of the carrying extension (30) of the wedge (21) lying opposite to the convergent end (22, 29) of the wedge arrangement and which pivots outwardly when the transmission (40) is set in operation and thereby displaces the wedge arrangement (20, 21) and thus brings the clamping surface (23) into engagement with the belt (10) and the support surface (18).

14. Safety belt arrangement in accordance with claim 13, characterised in that the pivotal lever (33) has a substantially right-angled arm (50) projecting away from it which engages into a radial slot (49) at the periphery of a blocking ring (6) of the belt reel blocking mechanism (4) and is pivoted by the latter into the pushed forward position for the wedge arrangement in the case of blocking of the pull-out movement.

15. Safety belt arrangement in accordance with one of the preceding claims, characterised in that the blocking ring (6) of the belt reel blocking mechanism (4) can be rotated a bit further after the blocking of the draw-out movement and that this rotary movement is exploited to displace the wedge arrangement (20, 21) into the holding position.

16. Safety belt arrangement in accordance with claim 15, characterised in that abutment means (50) hold the blocking ring (6) against further rotation on reaching the holding position.

## Revendications

1. Dispositif de ceinture de sécurité comportant un dispositif d' arrêt-enrouleur de ceinture propre à être fixé au châssis (11) d'une automobile, lequel dispositif comporte une poulie d'enrouleur de ceinture soumise à une force d'enroulement, laquelle poulie est munie d'un mécanisme de blocage de poulie de ceinture (4), qui bloque la poulie de ceinture (3) brutalement dans le sens de la sortie au moins lors d' accélérations de l'automobile et/ou de la ceinture (10) dans le sens de la sortie consécutives à un accident, et d'un mécanisme d' arrêt de ceinture (2) qui est prévu directement devant l'endroit où la ceinture (10) aborde la poulie d'enroulement de ceinture (3), et comprend
- un élément de coincement (14) avec une surface d'appui (18) s'étendant parallèlement et au voisinage du plan de ceinture,
- un dispositif de coin (20, 21) situé du côté opposé de la ceinture (10), orienté avec l'extrémité convergente (22, 29) dans le sens de la sortie, comportant :
-- une surface de serrage de coin (23) s'étendant parallèlement à la surface d'appui (18) et au voisinage de la ceinture (10) et
-- une surface de guidage de coin (34) prévue du côté éloigné de la ceinture (10), surface dont l'intersection ( Z ) avec la surface de serrage de coin (23) s'étend parallèlement au plan de ceinture et perpendiculairement à la direction longitudinale de ceinture,
ainsi qu'
- un corps de guidage fixe (16), qui comporte une contre-surface de guidage (35) se trouvant en contact de glissement avantageusement non-autobloquant avec la surface de guidage de coin (34),
étant entendu qu'un mécanisme de renvoi (40) actionné en rapport avec le mécanisme de blocage de poulie de ceinture (4) déplace, au moins lors d'une accélération consécutive à un accident, le dispositif de coin (20, 21) le long de la contre-surface de guidage (35) dans le sens de sortie de la ceinture et en contact avec la ceinture (10) serrée de ce fait contre la surface d'appui (18), de sorte qu'une action supplémentaire est exercée à l'encontre de la poursuite de la sortie de la ceinture (10),
caractérisé par le fait que le dispositif de coin (20, 21) se compose de deux coins (20, 21) situés l'un à côté de l'autre dans la direction longitudinale de la ceinture, dont le premier (20) comporte la surface de serrage de coin (23) et le second (21) la surface de guidage de coin (34), et les deux coins (20, 21) sont disposés l'un contre l'autre le long d'une surface d'autoblocage (27) du premier coin (20) et d'une surface opposée d'autoblocage (28) du second coin (21) de telle manière qu'après la venue en contact, suscitée par le mécanisme de renvoi (40), de la surface de serrage de coin (23) avec la ceinture (10) et la surface d'appui (18), la ceinture (10) peut encore un peu entraîner, dans le sens de sortie, le premier coin (20) par glissement contre le second coin (21), grâce à quoi la force de serrage entre la surface de serrage de coin (23) et la surface d'appui (18) est automatiquement encore augmentée.

2. Dispositif de ceinture de sécurité selon la revendication 1, caractérisé par le fait que le deuxième coin (21), sur son côté éloigné de l'extrémité convergente (29), comporte un prolongement de support (30), avec une surface de support (41), agencé pour l'essentiel sous la forme d'un angle, venant en prise contre le premier coin (20), prolongement sur lequel est en appui la surface de retenue (42) du premier coin (20) éloignée de l'extrémité convergente (22) du premier coin (20), aussi longtemps qu'un déplacement du dispositif de coin (20, 21) n'a pas encore eu lieu.

3. Dispositif de ceinture de sécurité selon la revendication 1 ou 2, caractérisé par le fait que la surface de serrage (23) du premier coin (20) est munie d'une denture (24) dirigée vers la ceinture (10).

4. Dispositif de ceinture de sécurité selon la revendication 3, caractérisé par le fait que la denture (24) est formée de plusieurs rangées dentées s'étendant transversalement à la direction de la ceinture, qui sont disposées l'une à côté de l'autre vues dans la direction de la ceinture, chaque rangée dentée se composant en section transversale de deux flancs (25a, 25b) se dirigeant l'un vers l'autre en regard de la ceinture (10) et le flanc (25b) orienté dans la sens de sortie de la ceinture présente, par rapport au plan de la ceinture, un angle plus aigu que celui du deuxième flanc (25a) éloigné de lui.

5. Dispositif de ceinture de sécurité selon l'une des revendications précédentes, caractérisé par le fait que la surface d'appui(18) de l'élément de serrage (14) comporte un évidement (19) s'étendant transversalement à la direction de ceinture auquel est associée, sur la surface de serrage (23) du premier coin (20), une saillie (26) réalisée essentiellement complémentaire.

6. Dispositif de ceinture de sécurité selon l'une des revendications 3, 4 ou 5, caractérisé par le fait que la saillie (26) sur la surface de serrage (23) du premier coin (20) est disposée, suivant le sens de sortie de la ceinture, à la suite de la denture (24) de la surface de serrage (23).

7. Dispositif de ceinture de sécurité selon l'une des revendications précédentes, caractérisé par le fait que le premier coin (20) est soumis à une force de rappel élastique agissant à l'encontre du sens de sortie de la ceinture.

8. Dispositif de ceinture de sécurité selon la revendication 7, caractérisé par le fait qu'entre le corps de guidage (16) et le premier coin (20) est disposé un ressort de compression (38) présentant au moins une composante essentielle parallèle à la direction de ceinture, ressort qui est disposé et guidé dans une fente (39) s'étendant le long du deuxième coin (21).

9. Dispositif de ceinture de sécurité selon l'une des revendications précédentes, caractérisé par le fait que l'élément de serrage (14) est fixe.

10. Dispositif de ceinture sécurité selon l'une des revendications 1 à 8, caractérisé par le fait que l'élément de serrage (14) est monté coulissant dans le sens de sortie de la ceinture relativement au châssis (11) sur un support (12) fixe.

11. Dispositif de ceinture de sécurité selon la revendication 10, caractérisé par le fait que l'élément de serrage (14) et le premier coin (20) sont couplés l'un à l'autre dans la direction de sortie de la ceinture par une liaison à transmission de force , de préférence par une liaison positive de forme.

12. Dispositif de ceinture de sécurité selon la revendication 11, caractérisé par le fait que l'élément de serrage (14) comporte deux saillies de guidage (36a, 36b) disposées latéralement, s'étendant perpendiculairement à la surface d'appui (18), saillies qui viennent en prise dans une rainure de guidage (37a, 37b) du premier coin (20) disposée latéralement, et qui ainsi établissent une liaison positive de forme entre l'élément de serrage (14) et le premier coin (20).

13. Dispositif de ceinture de sécurité selon l'une des revendications précédentes, caractérisé par le fait que le mécanisme de renvoi (40) comporte un levier pivotant (33) avec une butée (32) qui est au contact d'une surface de butée (31), en particulier du prolongement de support (30) du coin (21), se trouvant à l'opposé de l'extrémité convergente (22, 29) du dispositif de coin et qui bascule vers l'extérieur lors de la mise en action du mécanisme de renvoi (40), et par le fait que le dispositif de coin (20, 21) coulisse et met ainsi en prise la surface de serrage (23) avec la ceinture (10) et la surface d'appui (18)

14. Dispositif de ceinture de sécurité selon la revendication 13, caractérisé par le fait que le levier pivotant (33) comporte un bras (50) faisant saillie à partir de lui essentiellement à angle droit, bras qui vient en prise dans une fente radiale (49) à la périphérie d'une bague de blocage (6) du mécanisme de blocage de poulie de ceinture (4) et qui est pivoté par celui-ci dans la position d'avance du dispositif de coin dans le cas du blocage de la sortie.

15. Dispositif de ceinture de sécurité selon l'une des revendications précédentes, caractérisé par le fait que la bague de blocage (6) du mécanisme de blocage de poulie de ceinture (4) peut encore un peu tourner après le blocage de la sortie et que ce mouvement de rotation est utilisé pour le coulissement du dispositif de coin (20, 21) à la position d'arrêt.

16. Dispositif de ceinture de sécurité selon la revendication 15, caractérisé par le fait que les moyens de butée (50) maintiennent la bague de blocage (6) à l'encontre d'une rotation ultérieure lors de l'obtention de la position d'arrêt.
